# DEMANDE DE BREVET EUROPEEN

(11) **EP 1 271 113 A1**
(43) Date de publication de la demande: **02.01.2003**
(21) Numéro de dépôt: 02356114.5
(22) Date de dépôt: 18.06.2002
(51) Int. Cl.: G01F 23/20

(54) **Dispositif permettant d'évaluer visuellement le niveau de consommation d'une bouteille de gaz**

(30) Priorité: 18.06.2001 FR 0107932
(71) Demandeur: Deneuvis, Philippe, 69300 Caluire et Cuire (FR)
(72) Inventeur: Deneuvis, Philippe, 69300 Caluire et Cuire (FR)
(74) Mandataire: Thivillier, Patrick

(57) **Abrégé**

Ce dispositif comprenant, d'une manière concentrique, un support (2) coopérant avec le fond de la bouteille et un socle (1) assujetti audit support par des ressorts (3), ledit support (2) étant apte à être enfoncé, sous l'effet du poids de la bouteille, par rapport au socle (1) en comprimant les ressorts (3) lesquels, au fur et à mesure de l'allégement de la bouteille sous l'effet de la consommation de gaz, exercent une poussée verticale de bas en haut sur le support (2) qui présente des moyens d'indication visuelle (6) de la quantité de gaz restant dans la bouteille, ledit dispositif est remarquable en ce que :
- le support (2) présente des agencements (2c) pour l'intégration des ressorts (3) centrés sur des doigts de guidage (lc) formés en correspondance, en débordement du socle (1);
- le support (2) présente des agencements (2d) pour le centrage du fond de la bouteille à l'intérieur d'une zone délimitée par les agencements d'intégration (2c) des ressorts (3) et en appui sur une surface surbaissée (2a) par rapport auxdits agencements ;
- le support (2) est monté à l'intérieur du socle (1) à l'encontre des ressorts (3).

## Description

L'invention se rattache au secteur technique des moyens de contrôle visuel, notamment du niveau de consommation d'une bouteille de gaz ménagère.

Généralement, l'utilisateur d'une bouteille de gaz destinée à l'emploi ménager ne dispose d'aucun moyen pour connaître l'état de consommation de sa bouteille et donc de se préserver d'une panne. La seule possibilité qui lui est offerte est de soulever la bouteille pour tenter de déterminer, d'une manière très aléatoire, la quantité de gaz restant en fonction du poids de ladite bouteille.

Pour tenter de remédier à ces inconvénients, certaines solutions ont été proposées, comme il ressort de l'enseignement du brevet FR-222348 qui divulgue un support de bouteille de gaz comprimé muni dans sa partie externe de moyens d'indication approximatif de la quantité de gaz liquide contenu dans cette bouteille. Pour l'essentiel, des repères sont prévus à la périphérie d'une balance dynamométrique supportant la bouteille et coopérant avec un index de repérage fixe solidaire d'un socle supportant la balance, en combinaison avec des ressorts de compression.

Au fur et à mesure de la diminution de poids de la bouteille, le balancier dynamométrique est soumis à un poids de plus en plus faible. Il en résulte une détente progressive des ressorts, de sorte que l'index de repérage se trouve successivement en face de différents repères situés de plus en plus bas sur la périphérie de la balance.

Si cette solution technique peut être considérée comme satisfaisante dans son principe, elle nécessite des moyens de mise en oeuvre relativement conséquent. C'est le cas notamment au niveau de moyens de guidage entre la balance et le socle. Par ailleurs, l'ensemble du support, compte tenu du profil en section notamment de la balance et du socle, présente une hauteur non négligeable qui peut dans certains cas, interdire la mise en place de la bouteille de gaz lorsque cette dernière doit être logée dans un espace exigu comme c'est souvent le cas.

L'invention s'est fixée pour but de remédier à ces inconvénients de manière simple, sure et efficace et rationnelle.

A partir du principe de fonctionnement décrit dans le brevet FR 2122348, le problème que se propose de résoudre l'invention est de pouvoir équiper directement ou de manière rapportée, une bouteille de gaz notamment, d'un dispositif permettant d'évaluer visuellement le niveau de consommation, en ayant pour objectif de diminuer les coûts en simplifiant la conception des moyens essentiels de mise en oeuvre, tout en ayant pour objectif de proposer un ensemble de hauteur réduite et compacte.

Pour résoudre ce problème, il a été conçu et mis au point un dispositif du type de ceux comprenant, d'une manière connue, un support coopérant avec le fond de la bouteille et un socle assujetti audit support par des ressorts, ledit support étant apte à être enfoncé, sous l'effet du poids de la bouteille, par rapport au socle en comprimant les ressorts lesquels, au fur et à mesure de l'allégement de la bouteille sous l'effet de la consommation de gaz, exercent une poussée verticale de bas en haut sur le support qui présente des moyens d'indication visuelle de la quantité de gaz restant dans la bouteille.

Selon l'invention, et compte tenu du problème posé à résoudre :
- le support présente des agencements pour l'intégration des ressorts centrés sur des doigts de guidage formés en correspondance et en débordement du socle.
- Le support présente des agencements pour le centrage du fond de la bouteille à l'intérieur d'une zone délimitée par les agencements d'intégration des ressorts et en appui sur une surface surbaissée par rapport auxdits agencements ;
- Le support est monté à l'intérieur du socle à l'encontre des ressorts.

Un autre problème que se propose de résoudre l'invention est d'éviter tout désaccouplement intempestif du support et du socle tant que la bouteille n'est pas mise en place.

Pour résoudre un tel problème, le support et le socle présentent des moyens complémentaires de clipage aptes à assurer leur déplacement relatif et le blocage du support en position haute correspondant à la détente des ressorts en l'absence de poids.

Pour résoudre le problème posé de diminuer au maximum la hauteur de l'ensemble du dispositif, tout en ayant pour objectif d'assurer un parfait fonctionnement, notamment au niveau du déplacement du support par rapport au socle, compte tenu du poids de la bouteille le support et le socle sont constitués par deux couronnes, le rebord circulaire de la couronne du support étant centré à l'intérieur du rebord circulaire du socle, chacune desdites couronnes étant préformées au moment de leur fabrication pour présenter, au repos, une forme en section convexe.

Compte tenu du problème posé de diminuer la hauteur, les agencements d'intégration sont constitués par des bossages creux délimitant un chambrage interne, lesdits bossages étant formés, en débordement de la surface d'appui de la couronne du support coopérant avec le fond de la bouteille et située à l'intérieur de la zone définie par les bossages.

Selon un autre problème posé de faire travailler les ressorts dans de parfaites conditions en fonction de leur tarage initial, les doigts de guidage recevant les ressorts sont formés en débordement de la surface d'appui de la couronne et sont conformés en section pour être engagés dans les bossages, la hauteur desdits doigts étant déterminée pour venir en butée dans le fond du bossage avant écrasement total des ressorts.

Pour résoudre le problème posé de parfaitement répartir le poids de la bouteille par rapport au socle, les agencements de centrage de la bouteille sont constitués par des nervures de rigidité profilées et formées à l'intersection du rebord circulaire et de la surface d'appui de la couronne du support et le rebord circulaire de la couronne du support présentent des bossages de guidage et de centrage par rapport au rebord circulaire de la couronne du socle.

Pour résoudre le problème posé, de déplacer facilement l'ensemble du dispositif, selon une première forme de réalisation, les doigts de guidage sont agencés pour le vissage d'organes de roulement rapportés.

Selon une seconde forme de réalisation, la surface d'appui de la couronne du socle présente extérieurement une forme profilée faisant office de patin de glissement.

Avantageusement, les repères d'indication visuelle sont constitués par un bandeau formé de trois couleurs différentes en relation avec le rebord circulaire du socle .

L'invention est exposée ci-après plus en détail à l'aide des figures des dessins annexés, dans lesquels :

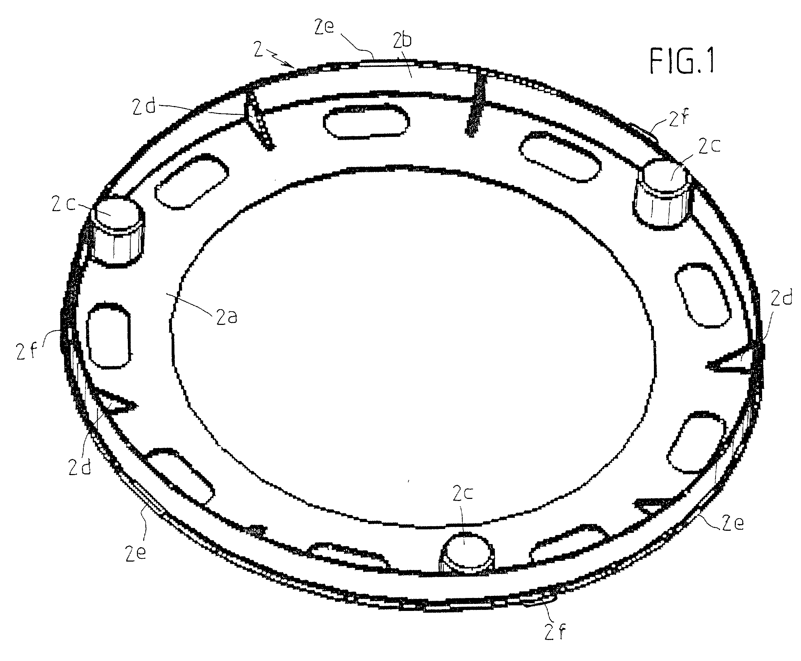

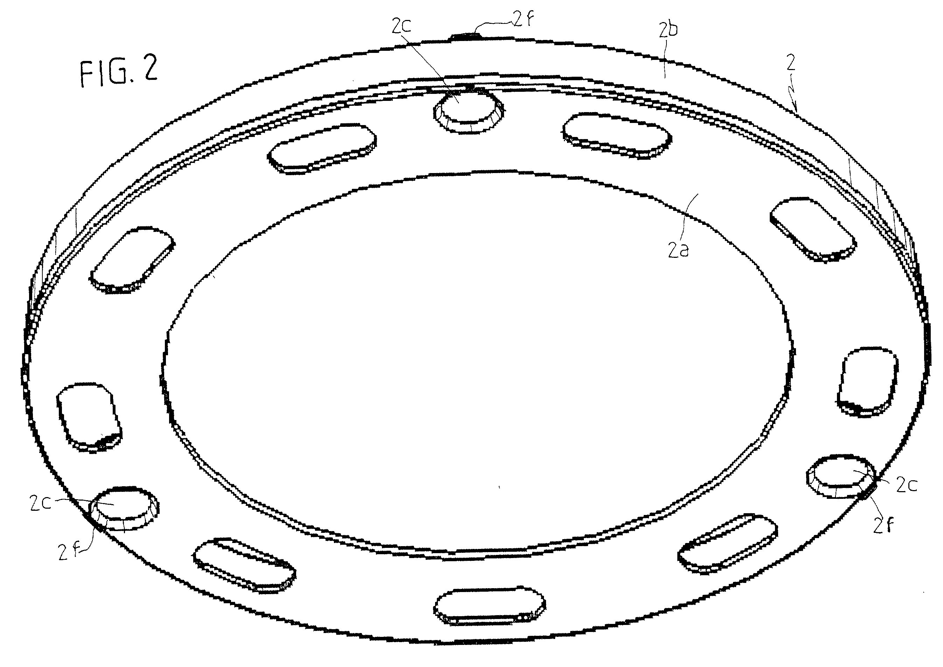

- Les figures 1 et 2 sont des vues en perspective du support, respectivement de dessus et de dessous.

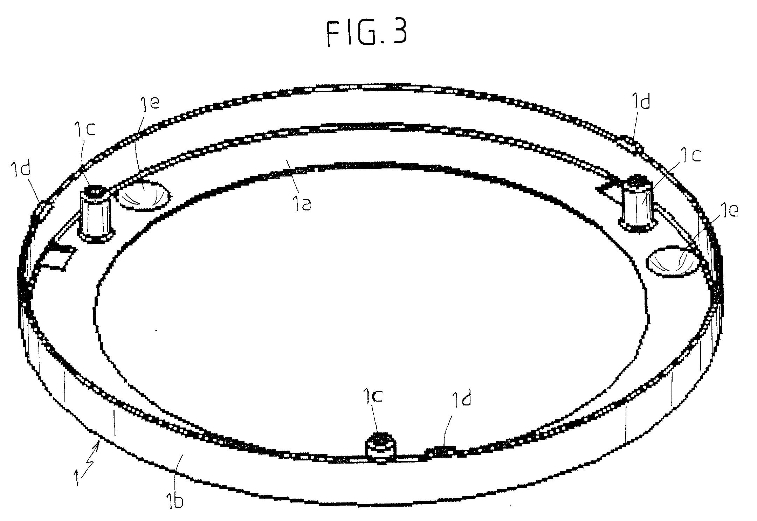

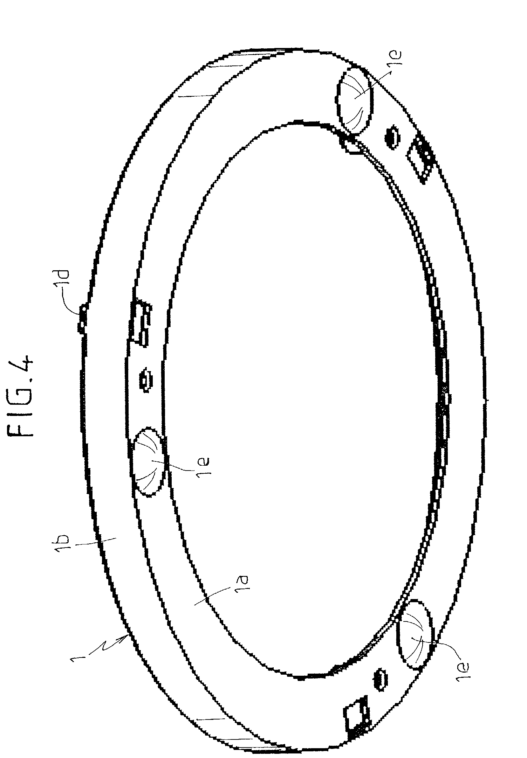

- Les figures 3 et 4 sont des vues en perspective du socle respectivement de dessus et de dessous.

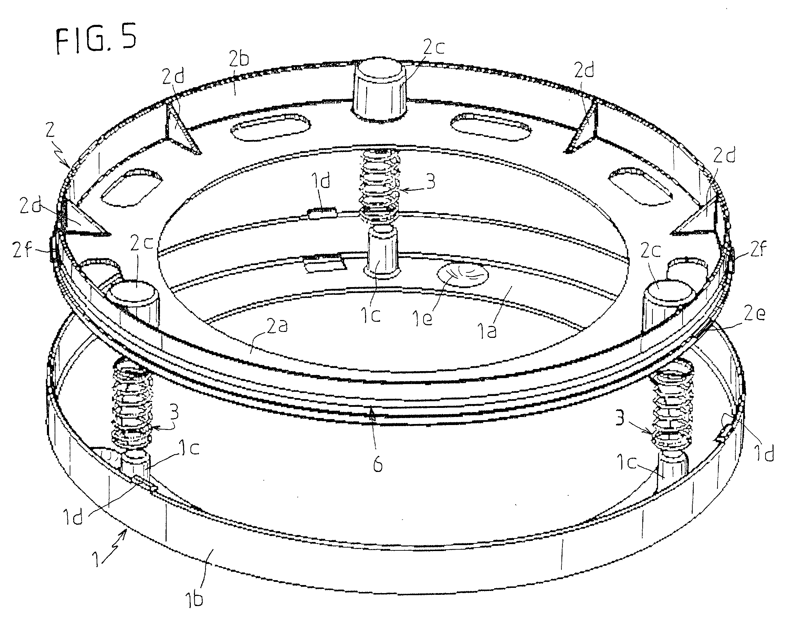

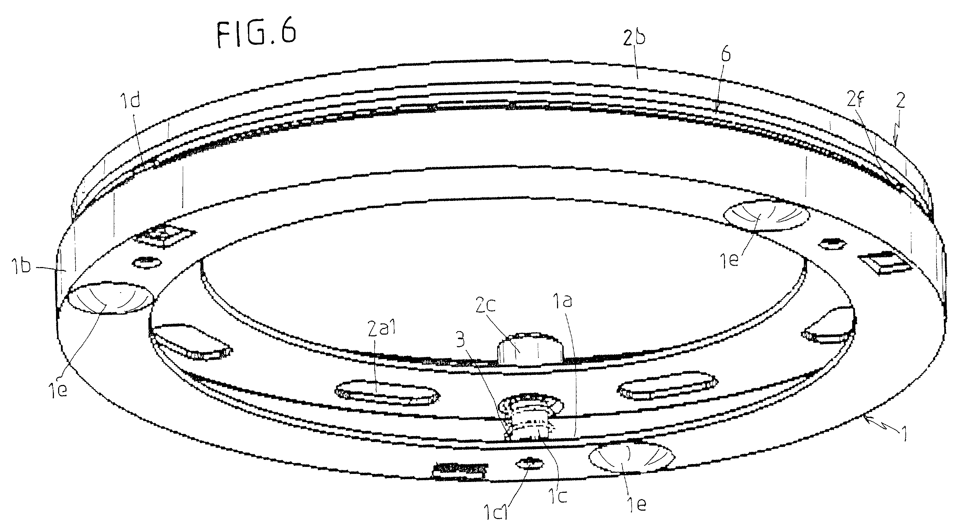

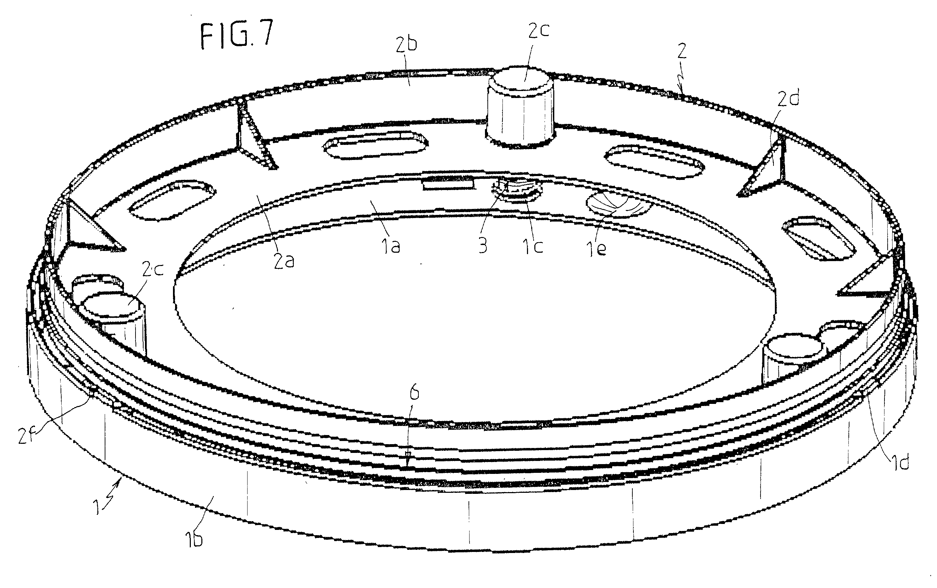

- Les figures 5, 6 et 7 sont des vues en perspective du dispositif après montage du support à l'intérieur du socle.
- Les figures 8 et 9 sont des vues en coupe longitudinales du dispositif, la figure 8 montrant la bouteille pleine, tandis que la figure 9 montre l'allègement de la bouteille.

En référence à ces dessins, le dispositif comporte une pièce cylindrique constituant le socle (1) où vient s'emboîter une deuxième pièce cylindrique servant de support (2) à la bouteille de gaz (B). L'ensemble est supporté par trois ressorts de compression (3), montés entre le socle (1) et le support (2), en combinaison avec des moyens de guidage comme il sera indiqué dans la suite de la description.

Un bandeau (6) constitué notamment de trois couleurs distinctes, est collé ou autrement fixé sur la circonférence supérieure du support (2).

Lorsque l'on pose une bouteille de gaz pleine (B) sur le support (2), les ressorts (3) subissent une force supérieure à leur poussée. Au fur et à mesure de la consommation, le poids de la bouteille diminue. Les ressorts (3) exercent alors une poussée sur le support (2) qui va remonter progressivement et laisser apparaître le bandeau (6). Ce dernier est constitué, comme indiqué, d'une bande de trois couleurs, dans l'ordre, de haut en bas : vert, jaune, rouge, par exemple.

Chacune de ces trois couleurs est en rapport avec le déplacement des ressorts (3), et annonce donc une étape dans la consommation de gaz. Elles sont, par exemple, réparties de la façon suivante :
- la couleur verte représente la première moitié du bandeau, équivalent à une consommation de 0% (bouteille pleine) à 50 %.
- la couleur jaune représente le quart suivant du bandeau, équivalent à une consommation de 50 % à 75 %.
- la couleur rouge représente le dernier quart du bandeau, équivalent à une consommation de 75 % à 100 % (bouteille vide)

Le support (2) et le socle (1) sont constitués par une couronne délimitant chacune une surface d'appui (2a) et (1a) avec un rebord circulaire externe (2b) et (1b). Le rebord circulaire (2b) est centré à l'intérieur du rebord circulaire (1b) de la couronne du support (2). Plus particulièrement, le support (2) est conformé pour être monté et centré à l'intérieur du socle (1) de sorte que la face d'appui (2b) est située immédiatement au-dessus de la face d'appui (1b).

Le support (2), notamment sa face (2a), présente des agencements pour l'intégration des ressorts (3) centrés sur des doigts (1c) en correspondance et en débordement de la surface d'appui (1a) du socle (1). Plus particulièrement, la surface d'appui (2a) présente, en débordement, des bossages creux (2c) délimitant un chambrage interne pour l'engagement des doigts de guidage (1c) sur lesquels sont montés les ressorts (3).

A titre indicatif, mais nullement limitatif, le support (2) présente au moins trois bossages (2c) décalés par exemple de 120° sur la circonférence de la couronne (2).

De manière importante, le fond de la bouteille est disposé à l'intérieur d'une zone délimitée par les bossages (2c) en appui sur la surface (2a). Autrement dit, les trois bossages (2c) à l'intérieur desquels sont montés les trois ressorts (3), sont disposés à l'extérieur du pourtour externe du fond de la bouteille (B). En outre, le rebord circulaire (2b) du support (2), présente des moyens de centrage de manière à parfaitement centrer la bouteille par rapport aux bossages (2c). Ces moyens de centrage sont avantageusement constitués par des nervures de rigidité inclinées (2d) formées à l'interséction du rebord circulaire (2b) et de la surface d'appui (2a) de la couronne du support (2).

Comme indiqué, les doigts de guidage (1c) constituent une portée cylindrique pour le montage des ressorts (3). Ces doigts (1c) sont formés en débordement de la surface d'appui (1a) de la couronne (1). La hauteur des doigts (1c) est déterminée pour venir en butée dans le fond des bossages correspondant (2c) avant écrasement total des ressorts (3) de manière à ce que ces derniers travaillent dans une phase optimum de fonctionnement.

Selon une autre caractéristique, le socle (1) et le support (2) présentent des moyens complémentaires de clipage, aptes à assurer leur déplacement relatif tout en permettant le blocage du support (2) en position haute, correspondant à la détente des ressorts (3), notamment en l'absence de poids. Par exemple, ces moyens de clipage complémentaires sont constitués par des languettes (1d) formées à partir de la surface externe du rebord circulaire (1b) et coopérant avec des forme en relief (2e), formées à partir du bord circulaire (1d) du socle (1). On prévoit également d'équiper la surface externe du rebord circulaire (2b) du support (2), de moyens de guidage et de centrage par rapport au rebord circulaire (1b) de la couronne du socle. Ces moyens de guidage et de centrage peuvent être constitués de nervures profilées de longueur réduite (2f).

Afin de tenir compte du poids de la bouteille (B), et pour assurer un parfait fonctionnement, à savoir un parfait glissement du support (2) à l'intérieur du socle (1), chacune des couronnes (1) et (2) sont préformées au moment de leur fabrication pour présenter, au repos, un profil en section, convexe. Sous l'effet du poids de la bouteille (B), ce profil en section convexe tend à ramener les deux couronnes (1) et (2) selon deux surfaces parfaitement planes et parallèles.

Dans une forme de réalisation, les doigts de guidage (1c) peuvent présenter un trou taraudé (1c1) ou autres agencements pour le vissage d'organes de roulement rapportés (7). Ou bien, dans une autre forme de réalisation, la surface d'appui (1a) de la couronne du socle (1), présente extérieurement des formes profilées (1e) faisant office de patins de glissement. Avantageusement, la surface d'appui (1a) de la couronne du socle (1) présente simultanément des patins de glissement (1e) et des agencements pour permettre à l'utilisateur de monter ou non les organes de roulement (7).

Les couronnes du socle (1) et du support (2) sont avantageusement obtenues par injection d'une matière plastique, sans pour cela exclure d'autres matériaux.

Sans pour autant sortir du cadre de l'invention, le support (2) dans ses formes et agencements tels que décrits ci-dessus peut être intégré au niveau du fond de la bouteille de gaz (B) lors de sa fabrication.

Il est à noter que la surface d'appui (2a), présente des lumières (2a1) permettant notamment de maitriser les tensions résultant du poids de la bouteille, tout en permettant un allègement.

Les diamètres internes des deux couronnes sont déterminés pour tenir compte de tous les diamètres de bouteille et permettre au support et au socle de travailler simultanément. Bien évidemment, le tarage des ressorts (3) est fonction du poids de la bouteille considérée.

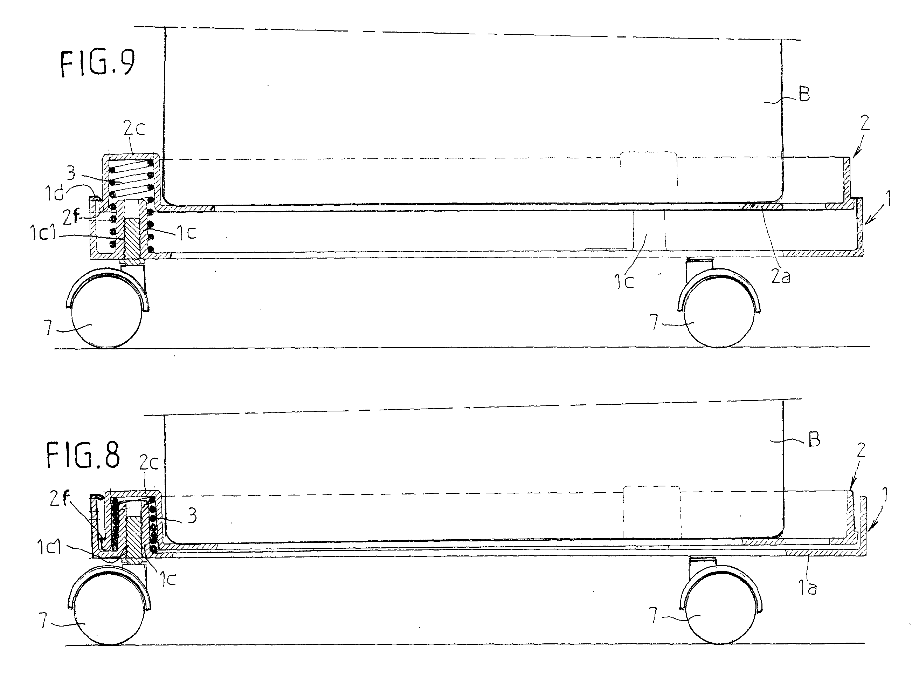

On renvoie aux figures 8 et 9 des dessins qui montrent le principe de fonctionnement du dispositif selon l'invention.

Les avantages ressortent bien de la description en particulier, on souligne et on rappelle :
- La disposition des ressorts sur l'extérieur du pourtour du fond de la bouteille
- La diminution du centre de gravité, permettant de rabaisser de manière significative la hauteur générale de l'ensemble.

On souligne également le parfait guidage du support (1) par rapport au socle.

## Revendications

1. Dispositif permettant d'évaluer visuellement le niveau de consommation d'une bouteille de gaz, comprenant, d'une manière concentrique, un support (2) coopérant avec le fond de la bouteille et un socle (1) assujetti audit support par des ressorts (3), ledit support (2) étant apte à être enfoncé, sous l'effet du poids de la bouteille, par rapport au socle (1) en comprimant les ressorts (3) lesquels, au fur et à mesure de l'allégement de la bouteille sous l'effet de la consommation de gaz, exercent une poussée verticale de bas en haut sur le support (2) qui présente des moyens d'indication visuelle (6) de la quantité de gaz restant dans la bouteille, ledit dispositif étant **caractérisé en ce que** :
- le support (2) présente des agencements (2c) pour l'intégration des ressorts (3) centrés sur des doigts de guidage (1c) formés en correspondance, en débordement du socle (1);
- le support (2) présente des agencements (2d) pour le centrage du fond de la bouteille à l'intérieur d'une zone délimitée par les agencements d'intégration (2c) des ressorts (3) et en appui sur une surface surbaissée (2a) par rapport auxdits agencements ;
- le support (2) est monté à l'intérieur du socle (1) à l'encontre des ressorts (3).

2. Dispositif selon la revendication 1, **caractérisé en ce que** le support (2) et le socle (1) présentent des moyens complémentaires de clipage (2e -1d) aptes à assurer leur déplacement relatif et le blocage du support (2) en position haute correspondant à la détente des ressorts (3) en l'absence de poids.

3. Dispositif selon la revendication 1, **caractérisé en ce que** le support (2) et le socle (1) sont constitués par deux couronnes, le rebord circulaire (2b) de la couronne du support (2) étant centré à l'intérieur du rebord circulaire (1b) du socle (1), chacune desdites couronnes étant préformées au moment de leur fabrication pour présenter, au repos, une forme en section convexe.

4. Dispositif selon la revendication 1, **caractérisé en ce que** les agencements d'intégration sont constitués par des bossages creux (2c) délimitant un chambrage interne, lesdits bossages (2c) étant formés, en débordement de la surface d'appui (2a) de la couronne du support (2) coopérant avec le fond de la bouteille et située à l'intérieur de la zone définie par les bossages (2c).

5. Dispositif selon les revendications 1 et 3, **caractérisé en ce que** les doigts de guidage (1e) recevant les ressorts (3), sont formés en débordement de la surface d'appui (1a) de la couronne 1 et sont conformés en section pour être engagés dans les bossages (2c), la hauteur desdits doigts étant déterminée pour qu'ils viennent en butée dans le fond des bossages avant écrasement total des ressorts.

6. Dispositif selon les revendication 1 et 3, **caractérisé en ce que** les agencements de centrage de la bouteille sont constitués par des nervures de rigidité profilées (2d) formées à l'intersection du rebord circulaire et de la surface d'appui de la couronne du support (2).

7. Dispositif selon la revendication 3, **caractérisé en ce que** le rebord circulaire de la couronne du support (2) présente des nervures de guidage et de centrage (2F) par rapport au rebord circulaire de la couronne du socle (1).

8. Dispositif selon la revendication 5, **caractérisé en ce que** les doigts de guidage (1e) sont agencés pour le vissage d'organes de roulement rapportés.

9. Dispositif selon la revendication 3, **caractérisé en ce que** la surface d'appui de la couronne du socle (1) présente extérieurement des formes profilées faisant office de patins de glissement.

10. Dispositif selon la revendication 1, **caractérisé en ce que** les repères d'indication visuelle sont constitués par un bandeau (6) formé de trois couleurs différentes et fixé au rebord circulaire du support (2) pour être en relation avec le rebord circulaire du socle (1).
